# EUROPEAN PATENT APPLICATION

(11) **EP 2 458 686 A2**
(43) Date of publication of application: **30.05.2012**
(21) Application number: 11188152.0
(22) Date of filing: 08.11.2011
(51) Int. Cl.: H01R 4/18, H01R 9/05

(54) **Line junction**

(30) Priority: 25.11.2010 SE 1051233
(71) Applicant: Scania CV AB, 151 87 Södertälje (SE)
(72) Inventor: Peltonen, Tomas, 151 46 Södertälje (SE); Turpeinen, Ismo, 146 45 Tullinge (SE)

(57) **Abstract**

The invention relates to a junction (21) for substantially loss-free branching of conductors (9,11,22), particularly intended for use in commercial vehicles, comprising a main conductor (22) and at least one connecting conductor (9,11,22). The invention is achieved by a branching sleeve (23) being placed round a de-insulated region of the main conductor (22) and over the end section of a portion free from insulation of a connecting conductor (9,11), by the branching sleeve (23) being firmly pressed over the de-insulated sections of the conductors (9,11,22) by crimping which in a single operation binds together mechanically both the main conductor (22) and connecting conductors (9,11) with maximum contact surface, and by the junction (21) being put into a moistureproof enclosure (24).

## Description

### TECHNICAL FIELD

The present invention relates to a junction for electrical conductors for conveying current to different consumers. The invention is primarily intended for line junctions for outdoor locations and particularly for use in commercial vehicles.

### STATE OF THE ART

Vehicles are usually equipped with one or more batteries to supply current to various electrical units on board. As the voltage used in vehicles is relatively low, 12-24 volts, high currents are required for certain functions in the vehicle, e.g. for starter motor, hydraulic system etc. For this reason, low resistances in the circuit are required in order to achieve a low voltage drop, which entails using large conductors. As the battery has to supply a large number of consumers, the conductor needs to be split into a number of smaller conductors. Various types of terminal blocks or connection boxes are currently used. Each such terminal block or connection box involves a certain increase in resistance between incoming and outgoing conductors because the contact surfaces are limited and moisture and dirt make their way into the connecting parts and into the end sections of the conductors and cause corrosion. Every connection point in a closed circuit contributes to voltage drops in the circuit. A crimped line lug connected to a contact point by a threaded connection thus represents two further contact surfaces. Threaded connections cause problems more often and greater voltage drops than a fixed connection, e.g. a crimped connection.

Conductors and connections in trucks are often located in the vehicle's chassis and are therefore exposed to external influences such as weather and wind from the surroundings, with moisture and dirt sooner or later making their way into conductors and connections. The effect on connection points is that over time they generate ever greater resistance and hence worse contact between incoming conductors.

It has previously been usual for the batteries in commercial vehicles to be situated close to the engine.

A suitable location has been immediately behind the cab, i.e. near to the fuel tank, so that the conductors between large consumers and batteries are as short as possible. Recently, however, market demand for larger fuel tanks has led to batteries having to be relocated rearwards in the vehicle and now not infrequently be situated at the extreme rear of the chassis. This entails long and large conductors from the batteries to the vehicle's engine and starter motor. The length of the conductors thus becomes greater. As each connection box involves risk of voltage drop, it is desired to minimise the number of connection boxes in the vehicle. At least one of them has inevitably to be situated near to the cab to allow distribution of current to consumers in the cab. However, current has also to be supplied to other consumers situated between the batteries and the engine's starter motor, e.g. to superstructures, rear-end lifts etc. As these devices are usually situated at the rear of the vehicle, relatively long conductors have to be run rearwards from this forward connection box, parallel with, but in the opposite direction to, the conductor from the batteries.

There is therefore a need to branch the conductors from the batteries on the path between the batteries and the engine/starter motor so that current can be supplied to these rear consumers. The state of the art for solving this problem provides the main conductor and those connected to it with line lugs which are crimped against the conductor and then screwed firmly in the terminal blocks. As each such mechanical threaded connection involves risk of voltage drop, this is not an acceptable solution. Moreover, these terminal blocks are relatively bulky, which is a problem owing to the shortage of space in the vehicle's chassis due to other components which have to be accommodated, e.g. voltage tanks, sensors, wiring, hoses etc.

Despite tight boxes for terminal blocks, corrosion around the electrical connection develops over time. Moreover, the use of terminal blocks allows unauthorised/undesirable further connections to be made over time, to the potential detriment of quality and safety. At an electrical connection there is always a voltage drop due to the resistance between the contact surfaces. There are high costs due to the number of components involved and the amount of fitting work. Terminal blocks are bulky and occupy much space.

Various solutions have been proposed for effecting junctions of conductors and cables.

JP006228539 describes for example how a cable comprising many different conductors can be joined to another cable with several conductors by using press contacts of a certain type to connect selected conductors in the connecting cable to selected connectors in the main cable. For mechanical strengthening of the connection, the whole junction is then cast in resin by means of a mould which is filled with resin material. The method according to this technique is not intended for large cables for high currents or for use of simple annular lugs drawn over the main cable to achieve high mechanical strength between the cables. The present invention achieves a tight and ageing-resistant connection with large contact surface between the cables which are to be connected together, resulting in very little or no voltage drops or losses in the junction, i.e. at the connection surface between the cables. The present solution results in only one contact point between the two cables, and the junction occupies relatively little space.

US4822434 describes a method whereby a specially configured cable lug with two annular parts connected together by a metal conductor is used to create a connection/joint between a cut cable at an uncut main cable. The main cable's insulation is peeled off at the point on the cable where it is desired to create the junction, and the cable lug is threaded onto the cable and pressed firmly at the peeled location. The connecting cable's insulation is peeled off at the end section and its conductors are inserted into, and clamped firmly in, the second annular part of the cable lug. The cables and the cable lug are then in placed in a mould and light-hardening material is added and hardened.

The cable lug referred to has several significant disadvantages, one being that it has a special configuration and is made in small volumes, making it an expensive component. There is also the risk of voltage drops because of there being two different connection points, one for each cable. Moreover, the metal part which holds together the annular parts does to some extent limit the current because of its limited cross-section, increasing the risk of voltage drops which would be significant in the context and would unavoidably cause losses in the circuit.

Prior art within this field thus does not solve the problem of easily and safely achieving a weather-resistant junction for large cables or conductors and for high currents which results in very low or no losses at the junction and at the same time occupies little space.

### SUMMARY OF THE INVENTION

An object of the invention is to solve the above problem and propose a junction which in a simple, safe and ageing-resistant way achieves a weather-resistant connection or junction for large conductors which is intended particularly for commercial vehicles and results in very low voltage drop and low or no losses.

A further object of the invention is that the junction be so configured that at the same time it occupies relatively little space.

A further object of the invention is that the configuration be functional, cost-effective and easy to manufacture, assemble and maintain.

These and other objects and advantages are achieved according to the invention by a device defined by the features indicated in the characterising part of the independent claim 1.

The invention thus relates to a substantially loss-free cable junction for conveying current to different consumers. The invention is primarily intended for cable junctions for outdoor locations and particularly for use in commercial vehicles between battery and starter motor and other consumers and comprises a branching point with a main conductor and at least one connecting further conductor.

According to an aspect of the invention, the main conductor runs unbroken through the junction/branching point and has at least one further conductor connected to it metallically at the branching point. The junction is cast in a moistureproof enclosure.

The junction according to the invention thus leaves the main conductor from the vehicle's battery to the starter motor uncut/unbroken, minimising the risk of voltage drops and losses in the conductor, while nevertheless allowing branching to consumers situated along the main conductor on its path from the battery to the starter motor. Short conductors between battery and consumers help to minimise voltage drops, so there is every reason for keeping all conductors as short as possible.

According to the invention, connecting conductors, e.g. of smaller diameter than the main conductor, are connected to it by means of a branching sleeve, preferably made of metal or equivalent, which is crimped so that the cores of the connecting conductors abut against those of the main conductor in a region where the insulation has been peeled off from the main conductor. The branching sleeve is drawn over the main conductor to the peeled location before the main conductor is provided with cable lugs at its two end sections and screwed firmly to the battery or a consumer. The branching sleeve is thus placed round the main conductor's region which is free from insulation and over the end section of a connecting portion free from insulation of the further connecting conductor. The cores of the connecting conductor are pushed into the branching sleeve and spread somewhat so that the contact surface with the main conductor becomes as large as possible before the branching sleeve is crimped. It is also possible to weld the conductors or their cores together ultrasonically.

It is also possible to join the conductors together in some other known way, e.g. by soldering or the like. The branching point, the connection location and the joined-together conductors are then cast with a casting compound which becomes electrically insulating after hardening and forms a hermetically sealed joint or enclosure so that moisture and dirt cannot reach exposed metal at the branching point. The casting compound may be a plastic such as PVC or some other material suitable for the purpose resulting in a moistureproof and wear-resistant configuration which is mechanically stable over time.

According to another aspect of the invention, the enclosure is provided with at least one connection collar for fastening at least one tubular cable protector over conductors which protrude from the enclosure. The number of connection collars may preferably correspond to the number of conductors which protrude from the enclosure.

Advantages of the solution according to the invention are that the vehicle's main conductor can remain unbroken while at the same time allowing it to branch to several consumers, thereby minimising the total voltage drop in the circuit. The junction will be very reliable with regard to electrical connection and also very resistant to wear and ageing because the connection point/joint is enclosed hermetically. The invention also leads to fewer fitting operations and occupation of less space than a normal known terminal block situated in a tight box.

This makes the system more cost-effective, particularly where large volumes are concerned.

The junction according to the invention also results in better tensile strength and is tolerant of careless handling and adaptable to different environments because of the possibility of changing the casting compound. Moreover, the load upon the environment is reduced in that the need for transport of components from suppliers is reduced to very low levels because parts concerned are often already used in large volumes by subcontractors, e.g. on line networks. A cast junction also weighs less than a terminal block in a tight box, resulting in a lighter vehicle and hence allowing a somewhat higher maximum load and/or smaller environmental impact.

Further features and advantages of the invention are indicated by the more detailed description of the invention set out below and the attached drawings and other claims.

### BRIEF LIST OF DRAWINGS

The invention is described below in the form of preferred embodiment examples with reference to the attached drawings.
**Figure 1** depicts a typical electric circuit in a vehicle with a connection box according to prior art.
**Figure 2** depicts a typical electric circuit in a vehicle with a junction according to the invention.
**Figure 3** depicts in more detail and in oblique side view the joining of an extra connecting conductor to an unbroken main conductor by means of a parallel splicing sleeve which has been crimped.
**Figure 4a** is a cross-section through the conductors and the parallel splicing sleeve according to Figure 3 with the parallel splicing sleeve uncrimped.
**Figure 4b** is a cross-section through the conductors and the parallel splicing sleeve according to Figure 3 after crimping.
**Figure 5** is a longitudinal section through the conductors and the junction according to Figure 3 but as seen from the side.
**Figure 6** depicts the cast junction according to the invention as seen straight from the side.
**Figure 7** depicts the cast junction according to the invention as seen obliquely from the side.
**Figure 8** depicts the cast junction according to the invention as seen straight from the side with line protections fitted.

### DESCRIPTION OF PREFERRED EMBODIMENTS

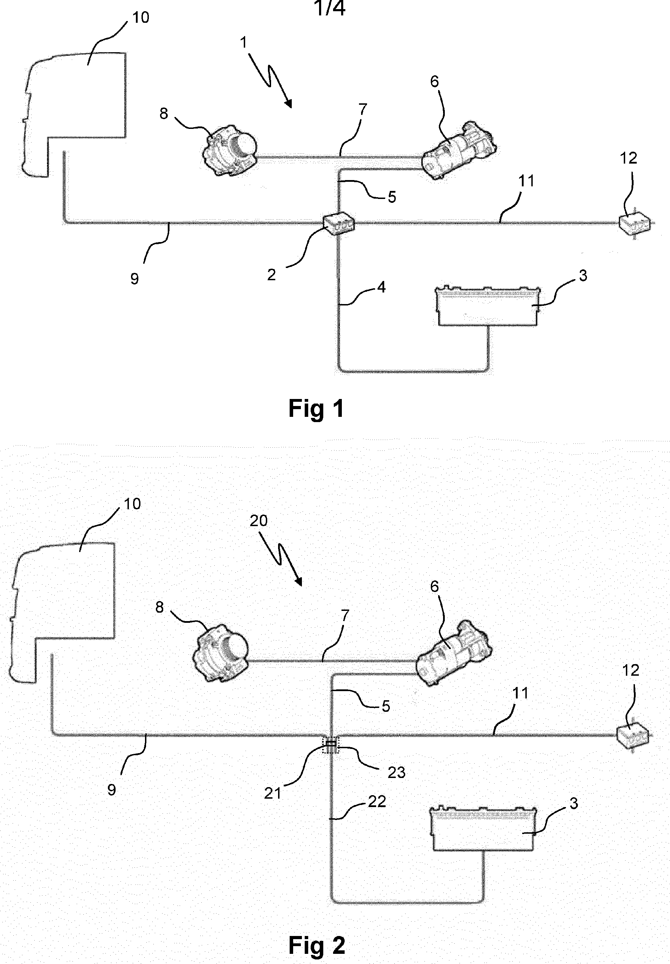

**Figure 1** thus depicts a typical electric circuit 1 in a vehicle, comprising a connection box 2 according to prior art. The typical electric circuit 1 comprises one or more batteries 3 situated for example in the rear of the frame of a tractor unit (not depicted). A main conductor 4 leads from the battery 3 to the connection box 2 with a number of threaded connections, e.g. six, arranged on a metal plate (not depicted) and therefore theoretically capable of connecting six conductors electrically to one another. The main conductor 4 is cut at the connection box 2 and provided with a cable lug which is screwed firmly in the connection box (not depicted). Another large conductor 5 leads from the connection box 2 to a starter motor 6, and a further conductor 7 leads from the starter motor 6 to a generator 8. A conductor 9 runs from the connection box 2 to the vehicle's cab 10 and divides at undepicted connection points, e.g. an electrical central unit, to the consumers situated in the cab 10, e.g. main headlamps, instrumentation, working lighting, ventilation system etc. The conductors in the cab 10 are intended to carry smaller currents and the connection boxes in the cab 10 are not exposed to outdoor conditions in the same way, so their connection points are less sensitive. A conductor 11 leads from the connection box 2 to a further connection box 12 situated at the rear of the vehicle to supply current to any trailers or superstructures which the vehicle may be towing or carrying.

**Figure 2** depicts an electric circuit 20, in principle the same as in Figure 1 but using a junction 21 according to the invention. The main conductor 22 from the battery 3, or batteries, runs in this case unbroken all the way to the starter motor 6, minimising the risk of voltage drops and losses in the circuit 20. The junction 21 in this embodiment example is situated at approximately the same location where the connection box 2 would otherwise be, but it may of course be situated anywhere on the main conductor 22 as appropriate with a view to the conductors in the vehicle being as short as possible. Short conductors between the battery 3 and consumers such as the starter motor 6 help to minimise voltage drops. The respective conductors 9,11 to the cab 10 and to the trailer or superstructure via the connection box 12, which are usually of smaller diameter than the main conductor 22, are here connected to the main conductor by means of a branching sleeve 23 or equivalent which is crimped so that the cores of the conductors 9,11 abut securely against those of the main conductor 22 in a region where the insulation has been peeled off the main conductor. The branching sleeve 23 is drawn over the main conductor 22 to a peeled section before the main conductor is provided with line lugs at its two end sections and then screwed firmly to the battery 3 or a consumer such as the starter motor 6. The cores of the connecting conductor 9,11 are pushed into the branching sleeve 23 and spread somewhat so that the contact surface becomes large before the branching sleeve 23 is crimped. It is also possible for the cores of the conductors 9,11,22 to be welded together ultrasonically. It is also possible to connect the conductors 9,11,22 together in some other suitable way, e.g. by soldering or the like. The connection point, the branching sleeve 23 and the connecting conductors 9,11,22 are then cast with a casting compound which becomes electrically insulating after hardening and forms a hermetic joint or enclosure. The casting compound may be a plastic such as PVC or some other material suitable for the purpose resulting in a moistureproof and wear-resistant configuration which is mechanically stable over time.

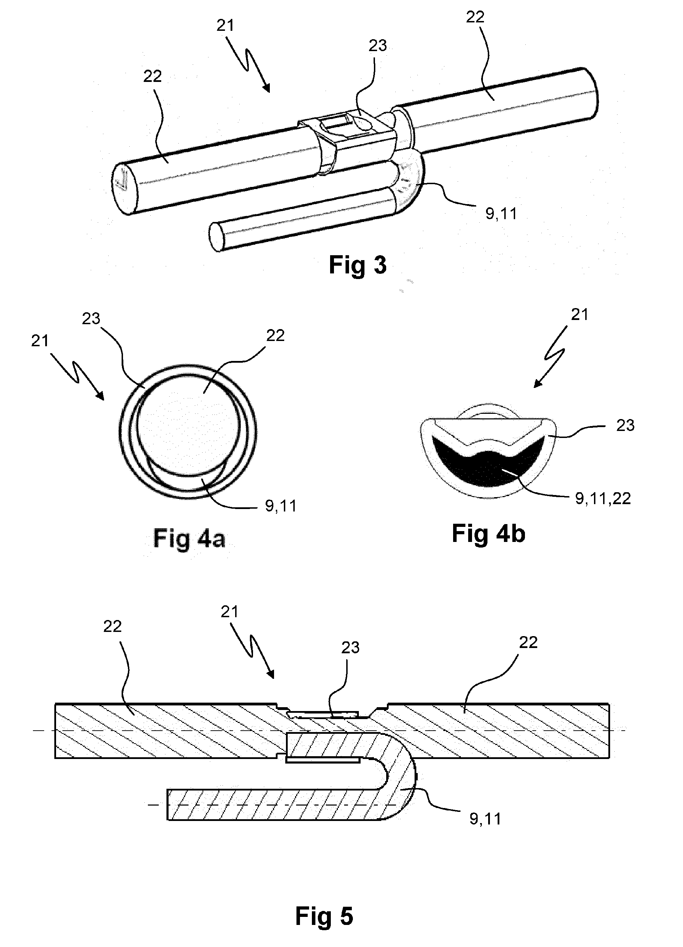

**Figure 3** depicts in more detail and in oblique side view the joining of a connecting conductor 9,11 to an unbroken main conductor 22 by means of a parallel splicing sleeve 23 which has been crimped. The insulation of the main conductor 22 has been peeled off at a suitable location along it and an annular parallel splicing sleeve 23 has been drawn over the main conductor 22 to the location where there is no insulation.

**Figure 4a** shows how the connecting conductor 9,11 has been stripped of its insulation at one of its end sections, and its stripped cores have been pushed into the parallel splicing sleeve 23 in the space between the main conductor 22 and the inside periphery of the parallel splicing sleeve. The cores of the connecting conductor 9,11 are preferably spread halfmoon fashion, as seen in cross section, before insertion into the parallel splicing sleeve 23, so that they abut against the cores of the main conductor 22 with as large a contact surface as possible. The parallel splicing sleeve 23 is then crimped so that a mechanically stable joint is formed. The cores of the conductors are thus pressed together and form an effective electrical joint which causes little or no voltage drop. The joint is very resistant to wear and ageing and also relatively space-saving. The connecting conductor 9,11 is bent with advantage in the same direction as the end is pushed into the parallel splicing sleeve 23 to bring about a further mechanical load relief in order to reduce the risk that the conductor 9,11 might slide out of the branching sleeve when subjected to high tensile load. At the same time, a certain distance is maintained between the main conductor 22 and the connecting conductor 9,11 where they run alongside one another. The diagram also shows how the diameter of the parallel splicing sleeve 23 is adapted so that the interior cross-section accommodates both the cores of the main conductor 22 and those of the connecting conductor 9,11 .

**Figure 4b** is a cross-section of the appearance of the junction 21 after the crimping has been completed, showing how the cores of the conductors 9,11,22 are pressed together to form a substantially integrated solid combination with very good contact and minimum risk of voltage losses.

**Figure 5** depicts as seen straight from the side a longitudinal section through the conductors 9,11,22 and the branching sleeve 23 of the junction 21 according to the invention according to Figure 3. The main conductor 22 runs unbroken/uncut through the junction 21, and the connecting conductor 9,11 is mechanically held firmly in a crimped branching sleeve 23, in full electrical contact with the main conductor 22.

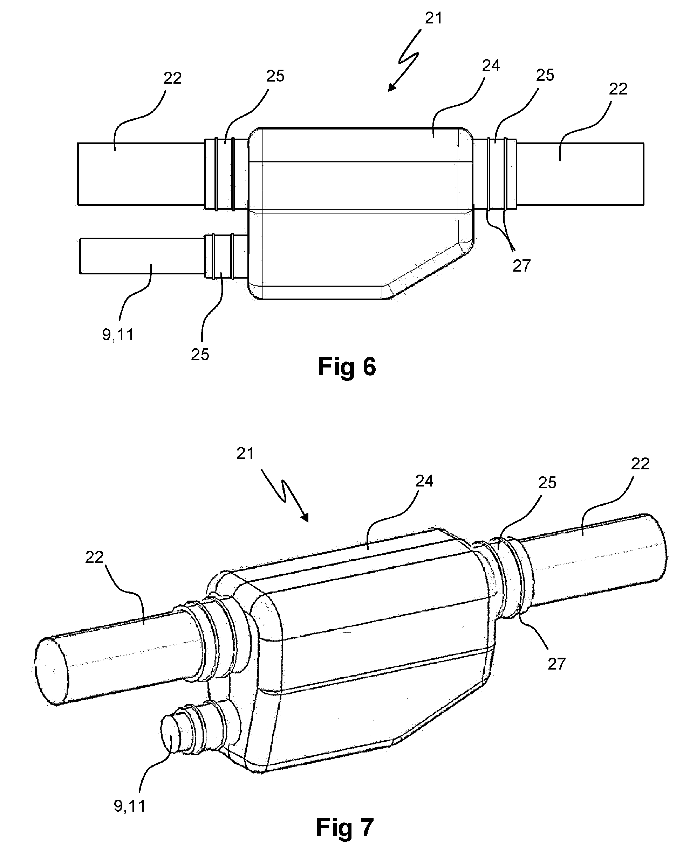

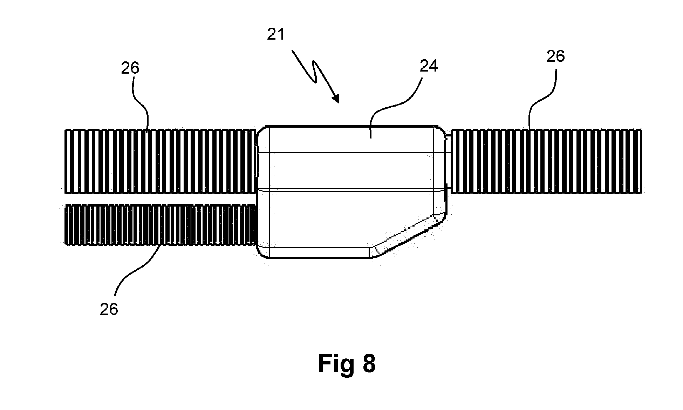

**Figure 6** depicts the junction 21 according to the invention as seen straight from the side after the conductors 9,11,22 and the branching sleeve 23 have been cast in a moistureproof enclosure 24. The enclosure 24 consists here of an electrically insulating plastic such as PVC but may of course consist of other insulating substances of known kinds. The enclosure 24 is provided, at the point where the conductors 9,11,22 emerge from it, with cylindrical collars 25 which serve as mountings for flexible tubular cable protectors 26 (see Figure 8). The collars 25 are provided with peripheral grooves 27 or ridges intended to fit into corresponding grooves or ridges in the cable protectors 26.

**Figure 7** depicts the cast junction 21 according to the invention as seen obliquely from the side. Here both the collars 25 and the circumferential ridges 27 are shown more clearly. The collars 25 are moulded with advantage integrally with the enclosure 24 and therefore consist of the same material as the enclosure. The collars 25 abut against the conductors 9,11,22 and stiffen them mechanically at the point where they emerge from the enclosure 24.

**Figure 8** depicts the cast junction 21 according to the invention as seen straight from the side with cable protectors 26 fitted to it in the form of one cable protector 26 per outgoing conductor 9,11,22.

The above description is primarily intended to facilitate understanding of the invention and is of course not restricted to the embodiments indicated, since other variants of the invention are also possible and conceivable within the scope of the inventive concept and the protective scope of the claims set out below. Thus the branching sleeve 23 need not be circular or tubular but may also have some other cross-sectional shape, e.g. it might be configured as a metal sheet pressed round the conductors 9,11,22.

## Claims

1. A junction (21) for substantially loss-free electrical joining together of conductors (9,11,22), particularly intended for use in commercial vehicles, comprising a branching point with a main conductor (22) and at least one connecting further conductor (9,11), **characterised**
- **in that** the main conductor (22) runs unbroken through the junction (21),
- that at least one further conductor (9,11) is metallically connected to the main conductor (22) in the junction (21), and
- that the junction (21) is put into a moistureproof enclosure (24).

2. A junction (21) according to claim 1,
**characterised**
- **in that** a branching sleeve (23) is placed round a region of the main conductor (22) which is free from insulation, and over the end section of a connecting portion free from insulation of the further connecting conductor (9,11).

3. A junction (21) according to claim 1 or 2, **characterised**
- **in that** the branching sleeve (23) is fitted firmly over the de-insulated portions of the conductors by crimping which joins together the main conductor (22) and the further connecting conductors (9,11) mechanically with maximum contact surface.

4. A junction (21) according to claims 1-3, **characterised**
- **in that** the enclosure (24) consists of an electrically insulating and hardened casting compound.

5. A junction (21) according to claim 4,
**characterised**
- **in that** the casting compound consists of a plastic such as PVC.

6. A junction (21) according to any foregoing claim, **characterised**
- **in that** the enclosure (24) is provided with at least one connection collar (25) for fastening at least one tubular cable protector (26).

7. A junction (21) according to any foregoing claim, **characterised**
- **in that** the number of connection collars (25) corresponds to the number of conductors (9,11,22) which protrude from the enclosure (24).

8. A junction (21) according to any foregoing claim, **characterised**
- **in that** the branching sleeve (23) is made of metal.

9. A vehicle comprising a junction (21) according to any one of claims 1-8.
